**Europäisches Patentamt**

**European Patent Office**

**Office européen des brevets**

(19)

(11) Veröffentlichungsnummer: **0 012 276**
A1

(12) # EUROPÄISCHE PATENTANMELDUNG

(21) Anmeldenummer: **79104752.5**

(22) Anmeldetag: **29.11.79**

(51) Int. Cl.³: **B 22 C 1/22,** C 08 G 65/36, C 08 L 71/06

(30) Priorität: **15.12.78 CH 19280/78**

(43) Veröffentlichungstag der Anmeldung: **25.06.80** Patentblatt 80/13

(84) Benannte Vertragsstaaten: **AT BE DE FR GB IT LU NL SE**

(71) Anmelder: **Gremolith AG, CH-9602 Bazenheid (CH)**

(72) Erfinder: **Motl, Miroslav, Eisbühlstrasse 6, CH-9602 Bazenheid (CH)**

(74) Vertreter: **Maspoli, Renato A., c/o EGLI PATENTANWLTE Horneggstrasse 4, CH-8008 Zürich (CH)**

(54) **Säurehärtendes Bindemittel für Giesserei-Formstoffe.**

(57) Das gegenüber den bekannten säurehärtenden Bindemitteln in bezug auf Wasserfreiheit, geringere Säuremengen und Abwesenheit von stickstoffhaltigen Verbindungen vorteilhafte, neue Bindemittelsystem weist einen Gehalt an in silanisiertem Furfurylalkohol gelösten Polyestern auf.

EP 0 012 276 A1

- 1 -

## Säurehärtendes Bindemittel für Giesserei-Formstoffe

Als säurehärtende Bindemittelsysteme sind im Giessereiwesen furfurylalkoholhaltige Kondensate aus Harnstoff-Formaldehyd, Phenol-Formaldehyd und Furfurylalkohol-Formaldehyd weit verbreitet. Sie werden entweder für sich allein, als Mischungen oder als Mischkondensate eingesetzt.

Solche Systeme sind z.B. in den folgenden Patenten oder Offenlegungsschriften beschrieben: DE-PS 12 15 872 (Anm.), DE-PS 12 39 436, DE-OL 25 20 363, DE-OL 26 04 492.

Die Herstellung der genannten Bindemittel erfolgt durch alkalische oder saure Kondensation von Harnstoff, Formaldehyd, Phenol und Furfurylalkohol. Diese Bindemittel sind kalthärtend und werden im Sand/Harz-Gemisch mit Säuren wie Benzol-, Toluol-, Xylolsulfonsäure, Phosphorsäure oder deren Gemische gehärtet (siehe dazu die DE-PS 15 08 712).

Zur Erreichung von besseren mechanischen Festigkeiten der ausgehärteten Formen und Kernen werden den Bindemitteln noch Alkoxysilane zugemischt, wie z.B. in DE-AS 12 52 853 und DE-OL 26 07 189. Gemeinsam ist den vorgenannten Bindemitteln der Gehalt an Formaldehyd. Demzufolge entwickeln sich bei ihrer Ueberführung in den ausgehärteten Zustand aldehydhaltige Gase und Dämpfe. Für die Einhaltung der vorgeschriebenen MAK-Werte am Arbeitsplatz sind dann grosse Investitionen notwendig. Bei den Harnstoff-Furanharzen kommt als weiterer Nachteil hinzu, dass die in Abhängigkeit vom Harnstoff- bzw. Stickstoffgehalt während des Gussprozesses entstehenden Zersetzungsgase zur Bildung von Gasblasen im Gussstück führen können.

Der in diesen Systemen auftretende Wassergehalt kann bei dickwandigen Formen zu starker Verzögerung der Durchhärtung und evtl. zu Formenbruch führen.

Der Erfindung liegt die Aufgabe zugrunde, ein neues Bindemittel zu schaffen, welches die Nachteile der bekannten säurehärtbaren Bindemittel vermeidet.

Das neue Bindemittel weist gegenüber den bekannten Systemen vor allem die folgenden Vorteile auf:
- Wasserfreiheit
- geringere Säuremenge (bei Altsandverarbeitung kann der Restsäuregehalt eine kritische Grössenordnung erreichen - die Folge sind eine Zunahme der Gasmenge (Arbeitshygiene) und Störungen im Aushärteprozess ($SO_2$!)
- sehr gute Elastizität des Sandes beim Ausschalen
- stickstoffbedingte Gussfehler ausgeschlossen
- äusserst guter Zerfall der Gussform nach dem Giessprozess auch beim Giessen von NE-Metallen

- wegen der Abwesenheit von Formaldehyd, Phenol und Harnstoff: Formstoffmischungen weisen keine unangenehme,
  gesundheitsschädliche Gasentwicklung auf, so dass beim
  Giessen die Gasentwicklung vermindert wird,

- geringere Säuremenge, die nötig ist, um das Bindemittel
  härten zu können, und
- bei allfälliger Ablagerung von Mittel und Sand/Mittel-
  Mischungen keine Gefährdung der Umwelt.

Das erfindungsgemässe säurehärtende Bindemittel für Giesserei-
Formstoffe ist in den Patentansprüchen spezifiziert.

Das erfindungsgemässe Bindemittel lässt sich kalt und mit
gleichen Säuren härten wie die bekannten säurehärtbaren
Bindemittel.

Nachfolgend wird die Erfindung anhand von Ausführungsbeispielen erläutert. Für diese Beispiele wurde jeweils in der
gleichen Weise vorgegangen. Es wurden 2000 g Sand H 32,
0,8 g p-Toluolsulfonsäure 65 % handelsüblicher Qualität,
2,4 g Bindemittel nacheinander in einem Labormischer des
Types Vogel und Schemmann von 3 l Inhalt gemischt, aus diesem
Sand/Harz-Gemisch Prüfstäbe geformt und mit +GF+-Prüfgerät
Biegefestigkeit der Stäbe nach 1 h, 2 h, 4 h und 24 h in
$kg/cm^2$ gemessen.

Folgende Bindemittel wurden zugrundegelegt:

Zur Herstellung der erfindungsgemässen Bindemittel wird
vorerst ein Kondensationsprodukt vorbereitet:

| | |
|---|---|
| 1,0 Mol | Phthalsäureanhydrid |
| 1,0 Mol | Maleinsäureanhydrid |
| 2,1 Mol | Propylenglykol |
| 50 ppm | Hydrochinon |

werden bei 150° - 210° verestert, bis Säurezahl von 20 bis
70, vorteilhaft ist SZ 40 - 50 mg KOH/g, erreicht wird.
Bei 140 - 160° wird dieses Harz mit Furfurylalkohol vorverdünnt und abgekühlt.

Diese Formulierung stellt nur eine beispielhafte Ausführung
des Kondensationsproduktes im erfindungsgemässen Bindemittel
dar.

Beispiel 1

60 %-ige Lösung von Furfurylalkohol und Kondensationsprodukt, 0,2 % Haftvermittler Silane A-1102 enthaltend:

FFA-Gehalt:          60,0 %
N2-Gehalt:            0,0 %
Wassergehalt:         0,5 %
Viskosität:          36 Sek. DIN-Becher 4/20°C
Dichte:              1,2 g/ml

Beispiel 2

70 %-ige Lösung von Furfurylalkohol und Kondensationsprodukt, 0,2 % Haftvermittler Silane A-1102 enthaltend:
FFA-Gehalt:     70,0 %
N2-Gehalt:       0,0 %
Wassergehalt:    0,5 %
Viskosität:     26 Sek. DIN-Becher 4/20°C
Dichte:         1,18 g/ml

Beispiel 3

70 %ige Lösung von Furfurylalkohol und Kondensationsprodukt, 5,0 % Propylenglykol und 0,2 % Haftvermittler
Silane A-1102 enthaltend:

FFA-Gehalt:     66,0 %
N2-Gehalt:       0,0 %
Wassergehalt:    0,5 %
Viskosität:     22 Sek. DIN-Becher 4/20$^{\circ}$C
Dichte:          1,17 g/ml

Als Vergleich zum Beispiel 1 - 3 wurden unter gleichen
Bedingungen Beispiele 4 - 6 durchgeführt:

Beispiel 4

Harnstoff-Formaldehyd-Furanharz handelsüblicher Qualität,
0,2 % Haftvermittler Silane A-1102 enthaltend:

FFA-Gehalt:        68,0 %
N2-Gehalt:          3,3 %
Freies Formalin:    1,4 %
Viskosität:        15 Sek. DIN-Becher 4/20$^{\circ}$C
Dichte:             1,15 g/ml

Beispiel 5

Formaldehyd-Furanharz handelsüblicher Qualität, 0,2 %
Haftvermittler Silane A-1102 enthaltend:

FFA-Gehalt:      94,0 %

N2-Gehalt:       0,0 %

Wassergehalt:    0,5 %

Freies Formalin: 1,5 %

Viskosität:     14 Sek. DIN-Becher 4/20$^{\circ}$C

Dichte:         1,15 g/ml

<u>Beispiel 6</u>

Eine Mischung aus 25 % Harz vom Beispiel 4 und 75 % Harz
vom Beispiel 2 bestehend, 0,2 % Haftvermittler Silane
A 1102 enthaltend:

FFA-Gehalt:      69,5 %

N2-Gehalt:       0,8 %

Wassergehalt:    3,8 %

Freies Formalin: 0,4 %

Viskosität:     20 Sek. DIN-Becher 4/20$^{\circ}$C

Dichte:         1,17 g/ml

Aus dem Sand, dem Härter und diesen Bindemitteln wurden
Formkörper hergestellt und auf ihre Eigenschaften untersucht.

Die jeweils ermittelten Werte sind in der folgenden Tabelle
zusammengefasst.

TABELLE

| Beisp. | Temp. °C Sand | Raum | Verarb.-zeit | Aushärte-zeit | Biegefestigkeit in kg/cm² 1 h | 2 h | 4 h | 24 h | Biegefestigkeit in kg/cm² nach Wärmebehandlung (Zerfall) 15 Min. | 30 Min. | 60 Min. | Bemerkungen |
|---|---|---|---|---|---|---|---|---|---|---|---|---|
| 1 | 20° | 20° | 8 Min. | 45 Min. | 9 | 21 | 21 | 33 | heiss 30 | heiss 5 | heiss 0 | |
| | | | | | | | | | kalt 31 | kalt 9 | kalt 0 | |
| 2 | 20° | 20° | 7 " | 30 " | 14 | 22 | 30 | 36 | heiss 31 | heiss 6 | heiss 0 | Zerfall bei 200°C/1h |
| | | | | | | | | | kalt 34 | kalt 9 | kalt 0 | heiss: 0 kg/cm² kalt: 0 kg/cm² |
| 3 | 20° | 20° | 13 " | 50 " | 7 | 21 | 27 | 34 | heiss 29 | heiss 6 | heiss 0 | |
| | | | | | | | | | kalt 32 | kalt 10 | kalt 0 | |
| 4 | 20° | 20° | 18 " | 90 " | 0 | 15 | 32 | 39 | heiss 35 | heiss 9 | heiss 0 | Zerfall bei 200°C/1h |
| | | | | | | | | | kalt 38 | kalt 17 | kalt 8 | heiss: 9 kg/cm² kalt: 17 kg/cm² |
| 5 | 20° | 20° | 5 " | 25 " | 17 | 26 | 37 | 43 | heiss 42 | heiss 12 | heiss 2 | |
| | | | | | | | | | kalt 40 | kalt 19 | kalt 10 | |

| Beisp. | Temp. Sand °C | Raum °C | Verarb.-zeit | Aushärte-zeit | Biegefestigkeit in kg/cm² | | | | Biegefestigkeit in kg/cm² nach Wärmebehandlung (Zerfall) | | | Bemerkungen |
|---|---|---|---|---|---|---|---|---|---|---|---|---|
| | | | | | 1 h | 2 h | 4 h | 24 h | 15 Min. | 30 Min. | 60 Min. | |
| 6 | 20° | 20° | 14 " | 60 " | 5 | 18 | 31 | 40 | heiss 29 / kalt 34 | heiss 5 / kalt 9 | heiss 0 / kalt 0 | Zerfall bei 200°C/1h heiss: 0 kg/cm² kalt: 0 kg/cm² |
| 7 | 30° | 25° | 4 " | 25 " | 17 | | | | | | | praktische Probe in einer Giesserei 100 % Altsand H 32 |
| 8 | 40° | 25° | 3 " | 20 " | 15 | | | | | | | praktische Probe in einer Giesserei 100 % Altsand H 32 |

Patentansprüche

1. Säurehärtendes Bindemittel für Giesserei-Formstoffe, gekennzeichnet durch einen Gehalt an in silanisiertem Furfurylalkohol gelöstem Polyester.

2. Bindemittel gemäss Patentanspruch 1, dadurch gekennzeichnet, dass die Lösung 0,05 bis 0,5 % Silanhaftvermittler, vorzugsweise Aminopropyltriäthoxisilan, und 5 bis 70 %, vorzugsweise 30 bis 40 %, Polykondensat enthält.

3. Bindemittel gemäss Patentanspruch 1, dadurch gekennzeichnet, dass neben Polyester zusätzlich Harnstoff-Formaldehyd-Furanharze vorliegen.

4. Bindemittel gemäss Patentanspruch 1, dadurch gekennzeichnet, dass neben Polyester zusätzlich kalthärtende Resole vorliegen.

5. Bindemittel gemäss Patentanspruch 1, dadurch gekennzeichnet, dass als Polyester ein Kondensationsprodukt aus Alkoholen, vorzugsweise Glykolen, und aus Säuren, vorzugsweise aus Dicarbonsäuren, vorliegt.

6. Bindemittel gemäss Anspruch 2 und 4, dadurch gekennzeichnet, dass die Lösung zusätzlich mittels ein- und/oder mehrwertigen Alkoholen modifiziert ist.

7. Bindemittel gemäss Patentanspruch 5, dadurch gekennzeichnet, dass als Alkoholkomponente Diole mit 2 - 19 C-Atomen eingesetzt sind, wie Aethandiol, Diäthylenglykol, Triäthylenglykol, Propandiol, Butandiol, Hydroxymethylcyclohexan, Diphenylolpropanbisglykoläther, vorzugsweise Aethandiol, Diäthylenglykol, Propandiol, Dipropylenglykol.

8. Bindemittel gemäss Patentanspruch 5, dadurch gekennzeichnet, dass als Säurekomponente Dicarbonsäuren mit
2 - 18 C-Atomen vorliegen, wie Phthalsäure, Phthalsäureanhydrid, Maleinsäure, Maleinsäureanhydrid, Adipinsäure,
vorzugsweise Phthalsäure- und Maleinsäureanhydride.

9. Bindemittel gemäss Patentanspruch 5, dadurch gekennzeichnet, dass zur Erzielung besonderer Effekte, wie
höhere oder niedere Festigkeiten, höhere oder niedere
Viskosität, höhere oder niedere Härtungsgeschwindigkeit,
höhere oder niedere Elastizität, gegebenenfalls neben
den unter den Patentansprüchen 7 und 8 genannten Hauptbestandteilen in untergeordnetem Masse auch andere
üblicherweise zur Herstellung von Polyesterharzen verwendete Ausgangsprodukte mit vorliegen, wie Trimethylolpropan, Hexanol, Sorbitol und/oder Citronensäure.

10. Bindemittel gemäss Patentanspruch 5, dadurch gekennzeichnet, dass die Veresterung der Komponenten gemäss
Ansprüchen 5 und 7 bis 9 nach einer der üblichen Methoden
durchgeführt werden kann, wie z.B. durch Verschmelzen
der Komponenten im Inertgasstrom, wobei die Veresterung
bei einer Säurezahl zwischen 20 - 70, vorzugsweise bei
40 - 50, abgebrochen wird.

11. Bindemittel gemäss Patentanspruch 5, dadurch gekennzeichnet, dass die Zusammensetzung der Ausgangsprodukte
gemäss Patentansprüchen 5 und 7 bis 9 so gewählt wird,
dass das Mol-Verhältnis OH zu COOH im Ansatz zwischen
70 zu 30 und 50 zu 50, vorzugsweise bei 52 zu 48, liegt.

12. Bindemittel gemäss Patentanspruch 5, dadurch gekennzeichnet, dass das Mol-Verhältnis der gesättigten und
ungesättigten Dicarbonsäuren gemäss Patentanspruch 8
zwischen 0 zu 100 und 100 zu 0, vorzugsweise zwischen
40 zu 60 und 60 zu 40, liegt.

0012276
Nummer der Anmeldung

EP 79 10 4752

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 2 090 611</u> (CHEMISCHE WER-KE ALBERT)<br><br>* Ansprüche 1,2; Seite 1, Zeilen 25 -37; Seite 3, Zeilen 1-5; Seite 4, Zeilen 19-31 *<br><br>-- | 1,5,7,8 |
| A | <u>FR - A - 2 019 541</u> (HITCO)<br><br>* Ansprüche 1-4; Seite 3, Zeilen 22-40; Seite 4, Zeilen 1-27; Seite 6, Zeilen 15-18 *<br><br>-- | 1,5,7-12 |
| A,D | <u>DE - A - 2 604 492</u> (HUTTENES-ALBER-TUS CHEMISCHE WERKE)<br><br>* Ansprüche 3-8; Seite 5, unter und Seite 6, oben *<br><br>-- | 1-4 |
| A | <u>FR - A - 2 359 878</u> (FOSECO TRA-DING)<br><br>* Ansprüche 1-10, 13-16 *<br>& DE - A - 2 733 866<br><br>-- | 1-3 |
| X,P | <u>GB - A - 2 002 785</u> (THE QUAKER OATS CO.)<br><br>* Ansprüche 1-15; Seite 3, Zei-len 40-53 *<br>& DE - A - 2 832 869<br><br>-- | 1-3,6 |
| P | <u>US - A - 4 143 022</u> (I. RAJARAM)<br><br>* Ansprüche 1-15; Spalte 2, Zei-len 14-20 *<br><br>---- | 1-4 |

Der vorliegende Recherchenbericht wurde für alle Patentansprüche erstellt.

**KLASSIFIKATION DER ANMELDUNG (Int.Cl. 3)**

B 22 C 1/22
C 08 G 65/36
C 08 L 71/06

**RECHERCHIERTE SACHGEBIETE (Int. Cl. 3)**

B 22 C 1/22
1/20
C 08 G 65/36
C 08 L 71/06

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

| Recherchenort | Abschlußdatum der Recherche | Prüfer |
|---|---|---|
| Den Haag | 14-03-1980 | SCHURMANS |

EPA form 1503.1 06.78